# EUROPÄISCHE PATENTSCHRIFT

(11) **EP 0 536 496 B1**
(45) Veröffentlichungstag und Bekanntmachung des Hinweises auf die Patenterteilung: **11.02.1998**
(21) Anmeldenummer: 92113177.7
(22) Anmeldetag: 03.08.1992
(51) Int. Cl.: H04Q 1/14, G02B 6/44

(54) **Schaltgarnitur für Glasfaserkabel der Fernmelde- und Datentechnik**
Switching device for glass fibre cables of the telecommunication and data technology
Dispositif de commutation pour câbles à fibres de verre dans la technique de télécommunication et de données

(30) Priorität: 05.10.1991 DE 4133375
(43) Veröffentlichungstag der Anmeldung: 14.04.1993
(73) Patentinhaber: KRONE Aktiengesellschaft, 14167 Berlin (DE)
(72) Erfinder: Teichler, Heide, W-1000 Berlin 62 (DE); Hegner, Gunter, W-1000 Berlin 27 (DE); Biederstedt, Lutz, W-1000 Berlin 28 (DE); Richter, Gerd, W-1000 Berlin 37 (DE); Röseler, Voker, W-1000 Berlin 21 (DE)

(56) Entgegenhaltungen:
- EP-A- 0 211 208
- EP-A- 0 369 524
- CH-A- 623 698
- DE-A- 3 743 632

## Beschreibung

Die Erfindung bezieht sich auf eine Schaltgarnitur für Glasfaserkabel der Fernmelde- und Datentechnik, insbesondere Glasfaserkabel-Aufteilungs- und Endgestell, aus einem am Gestell gelagerten Rahmen mit einem Rangierfeld für die Glasfaserkabeladern und mit mindestens einem, mit Einschuböffnungen für Spleißkassetten versehenen Magazin.

Schaltgarnituren der gattungsgemäßen Art ermöglichen es, zu Meßzwecken eine Steckverbindung zwischen ankommenden und abgehenden Glasfaserkabeladern aufzutrennen, wobei an- und abgehende Glasfaserkabeladern leicht zugänglich sein und je nach Bedarf rangiert, d.h. beliebig verbunden werden müssen. Die Schaltgarnituren dienen insbesondere für das Glasfaser-Ortsnetz (Overlay-Netz) der jeweiligen Telefongesellschaften.

Eine Schaltgarnitur der gattungsgemäßen Art ist aus dem sonderdruck aus " telcom report ", 10. Jahrgang, März 1987, Beiheft "Multiplex - und Leitungseinrichtungen", Seiten 27 bis 32, vorbekannt. Bei einer solchen, als Glasfaserkabel-Endgestell ausgebildeten Schaltgarnitur sind in einem mittleren Steckerfeld 60 Steckverbindungen untergebracht. Die Glasfaserkabel-Stecker sind werksseitig als sogenannte Pigtails (Stecker mit Glasfaserkabelader) vormontiert, die am Montageort an die Glasfaserkabeladern geschweißt werden. Dafür ist im unteren Teil des Endgestells ein mit Einschuböffnungen versehenes Magazin für Spleißkassetten vorgesehen, das aus dem am Gestell gelagerten Rahmen nach vorne herausgeklappt werden kann, um die Spleißkassetten zu entnehmen. Es ist ferner als Schaltgarnitur ein Glasfaserkabel-Aufteilungsgestell vorbekannt, das drei übereinanderliegende Spleißfelder aufweist, das sind mit Einschuböffnungen für Spleißkassetten versehene Magazine, in deren oberen Magazin die Adern der Ortsverbindungskabel, in deren mittleren Magazin die Adern der Innenkabel der Vermittlungsstelle und in deren unteren Magazin die Adern der Teilnehmeranschlußkabel gelagert sind.

Die Verbindungen zwischen den verschiedenen Glasfaserkabeladern werden dabei mit Schaltadern hergestellt. Bei beiden Ausführungsformen sind jeweils 10 Spleißkassetten eines jeden Spleißfeldes in einem Magazin zusammengefaßt, das sich auf einem ausklappbaren Schwenkarm befindet, dem das Magazin entnommen werden kann, um am Arbeitstisch angeklemmt zu werden.

Die vorbeschriebenen Schaltgarnituren für Glasfaserkabel der Fernmelde-und Datentechnik haben den Nachteil, daß eine relativ schlechte Zugänglichkeit zu den zugehenden und abgehenden Glasfaserkabeladern besteht, wobei die Bruchgefahr bei der Montage, insbesondere beim Spleißvorgang, sehr groß ist.

Der Erfindung liegt daher die Aufgabe zugrunde, die Schaltgarnitur für Glasfaserkabel der Fernmelde-und Datentechnik der gattungsgemäßen Art dahingehend zu verbessern, daß eine wesentlich einfachere Handhabung möglich ist, so daß die Gefahr sehr gering ist, daß einzelne Glasfaserkabeladern beschädigt werden und daß insbesondere das Faserbündel des Hauptglasfaserkabels zerbrochen werden kann.

Zur Lösung dieser Aufgabe sieht die Erfindung vor, daß der Rahmen um eine Vertikalachse schwenkbar am Gestell gelagert ist, daß am Rahmen ein Rangierfeld mit einem von der Vorderseite und der Rückseite des Rahmens zugänglichen Steckerfeld für ankommende und abgehende Glasfaserkabeladern angeordnet ist und daß auf der Rückseite des Rahmens mindestens ein Magazin vorgesehen ist, dessen Spleißkassetten-Einschuböffnungen parallel zur Rückseite des Rahmens und im wesentlichen senkrecht zu dessen Vertikalachse auf der dieser gegenüberliegenden Seite des Rahmens angeordnet sind. Bei der erfindungsgemäßen Schaltgarnitur sind die einzelnen Glasfaserkabeladern in Spleißkassetten aufgenommen, die bei zugeklapptem Rahmen hinter dessen Rückseite gesichert angeordnet sind und die nach dem Herumschwenken des Rahmens um etwa 90° nach vorne geschwenkt sind, so daß die Einschuböffnungen des Magazines nach vorne weisen und eine leichte Entnahme der Spleißkassetten nach vorne möglich ist. Gleichzeitig ist am Rahmen das Rangierfeld mit einem von der Vorderseite und von der Rückseite des Rahmens zugänglichen Steckerfeld (Patchfeld) angeordnet, an das die ankommenden bzw. abgehenden Glasfaserkabeladern als Pigtails (Stecker mit Glasfaserkabelader) über Kupplungen angeschlossen sind. Bei der erfindungsgemäßen Schaltgarnitur besteht somit eine leichte Zugänglichkeit zu den ankommenden und abgehenden Glasfaserkabeladern sowohl am Steckerfeld (Patchfeld) als auch am Magazin zur Aufnahme der Spleißkassetten, so daß eine Bruchgefahr der Glasfaserkabeladern bei der Montage, z. B. einem Spleißvorgang, äußerst gering ist. Die wesentlich einfachere Handhabung aller Glasfaserkabeladern vermindert die Gefahr, daß einzelne Faserbündel des Hauptglasfaserkabels brechen, auf ein Minimum.

Weitere vorteilhafte Ausgestaltungen der Erfindung ergeben sich aus den abhängigen Ansprüchen.

Die erfindungsgemäße Schaltgarnitur für Glasfaserkabel der Fernmelde-und Datentechnik ist nachfolgend anhand eines in den Zeichnungen dargestellten Ausführungsbeispieles eines Glasfaserkabel-Aufteilungs- und Endgestelles näher erläutert. Es zeigen:
- Fig. 1: Das Glasfaserkabel-Aufteilungs- und Endgestell in perspektivischer Darstellung, rechts im geschlossenen und links im aufgeklappten Zustand,
- Fig. 2: das Glasfaserkabel-Aufteilungs- und Endgestell in einer Seitenansicht, rechts im geschlossenen und links im aufgeklappten Zustand,
- Fig. 3: einen im größeren Maßstab gezeichneten Vertikalschnitt durch das Rangierfeld und
- Fig. 4: eine schematische Darstellung der Kabelführung.

Das Glasfaserkabel-Aufteilungs- und Endgestell bildet eine Schaltgarnitur für Glasfaserkabel der Fernmelde- und Datentechnik und besteht aus einem Gestell 1 mit mehreren zwischen jeweils zwei vertikalen Streben 2 gebildeten Buchten gleicher Breite, in welchen Rahmen 3 über jeweils eine seitliche Vertikalachse 26 schwenkbar am Gestell 1 gelagert sind. Der Rahmen wird vorzugsweise aus zwei seitlichen Holmen 14 gebildet, zwischen denen mehrere als Lagerstellen ausgebildete Querstreben befestigt werden. Die übrigen Baugruppen der Schaltgarnitur sind als Module ausgebildet und werden ebenfalls zwischen den Holmen 14 befestigt. Dadurch können beliebige Konfigurationen zusammengesteckt werden. Eine Konfiguration wird im folgenden beschrieben.

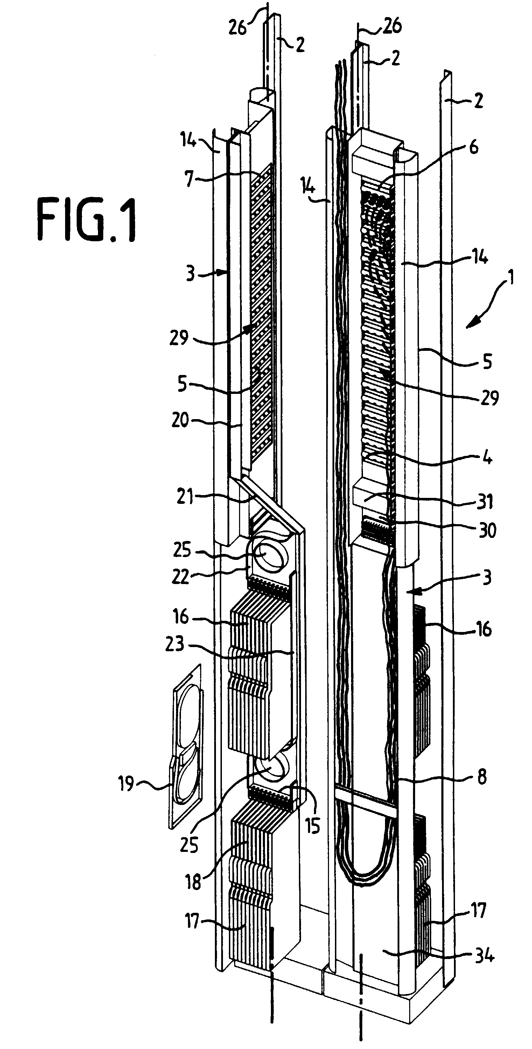

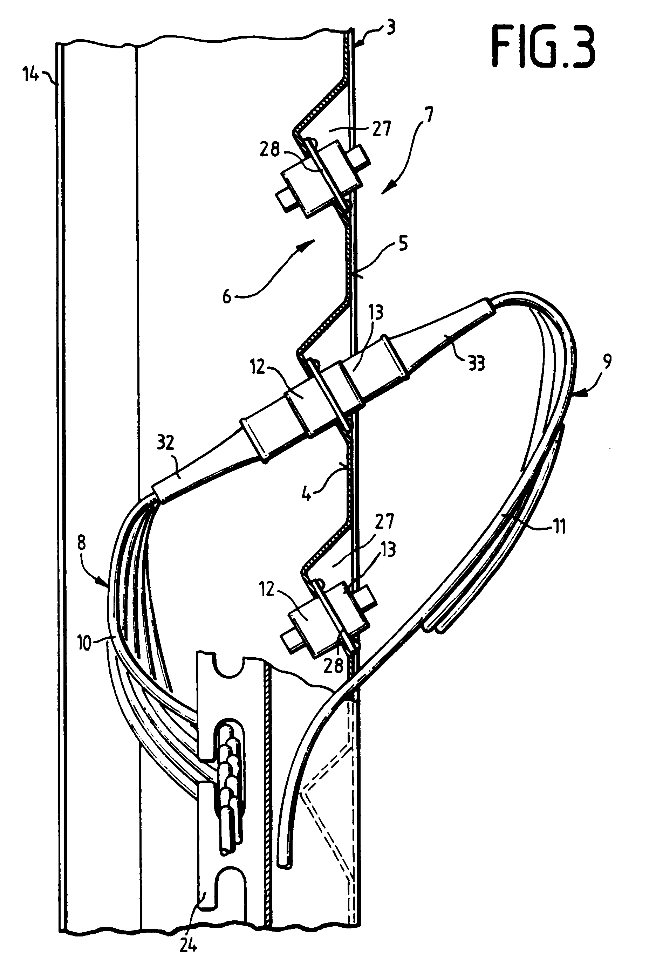

Jeder Rahmen 3 umfaßt ein Rangierfeld 29 mit einem auf seiner Vorderseite 4 und auf seiner Rückseite 5 zugänglichen Steckerfeld (Patchfeld) 6,7 für ankommende bzw. abgehende Glasfaserkabeladern 8,9, die über Pigtails 10,11 an Glasfaserkabelader-Kupplungen 12,13 angeschlossen sind. Die Pigtails 10,11 bestehen aus jeweils einem Stecker 32 bzw. 33 mit einer angeschlossenen Glasfaserkabelader 8 bzw. 9. Die Glasfaserkabelader-Kupplungen 12,13 sind gemäß Figur 3 durch die Steckerfelder 6,7 verbunden, die an einer mit im Querschnitt dreieckigen Einbuchtungen 27 versehenen Trägerplatte 28 ausgebildet sind. Die Vorderseite 4 des Rahmens 5 ist unterhalb des vorderen Steckerfeldes 6 flächig geschlossen und seitlich mit Holmen 14 versehen, die sich über die volle vertikale Baulänge des Rahmens 3 erstrecken. Die Holme 14 sind so ausgebildet, daß zwischen diesen Überlängen des Vermittlungskables geführt und aufgenommen werden können, wie es in Fig. 1 rechts dargestellt ist.

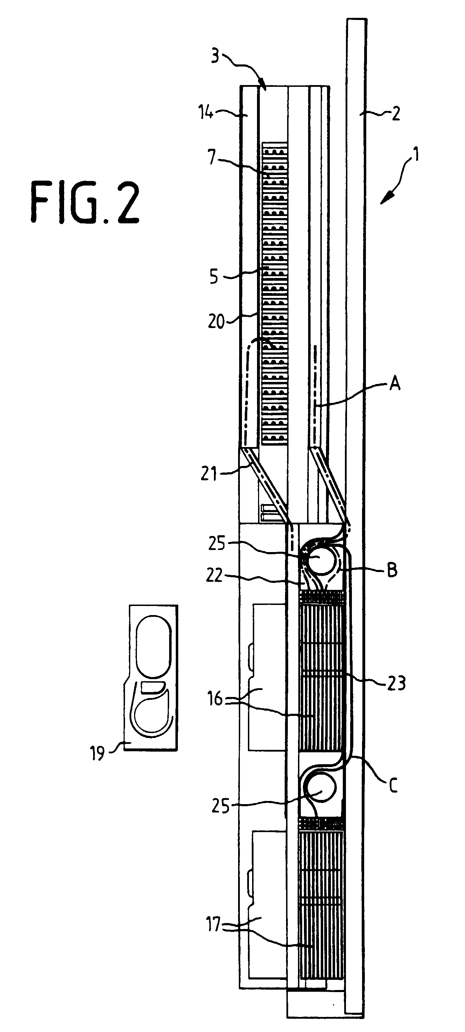

Auf der Rückseite 5 des Rahmens 3 sind unterhalb des Steckerfeldes 7 zwei Magazine 16,17 befestigt, deren Einschuböffnungen 18 für Spleißkassetten 19 parallel zur Rückseite 5 des Rahmens 3 und im wesentlichen senkrecht zu dessen Vertikalachse 26 auf der dieser gegenüberliegenden Seite des Rahmens 3 angeordnet sind. Jedes Magazin 16,17 nimmt mehrere Spleißkassetten 19 auf, die in den Figuren 1 und 2 in ihrer Einschublage und Einschubrichtung außerhalb des jeweiligen Magazines 16,17 dargestellt sind. Es sind Führungen 20 bis 24 und Umlenkungen 25 für die Glasfaserkabeladern 8,9 vorhanden, die sich zwischen den in den Magazinen 16,17 aufgenommenen Spleißkassetten 19 und den Steckerfeldern 6,7 erstrecken. Wie es die rechte Darstellung in Figur 1 zeigt, sind im geschlossenen Zustand des Rahmens 3 nur dessen auf der Vorderseite 4 gelegenes Steckerfeld 6 und ein Anschlußfeld 30 mit Anschlußleisten 31 zum Abschluß eventuell vorhandener Kupferadern zugänglich, so daß auch nur die dort über Glasfaserkabelader-Kupplungen 12 angeschlossenen Pigtails 10 der Glasfaserkabeladern 8 bzw. die nicht dargestellten Kupferadern handhabbar sind. In der in Figur 1 links dargestellten, um etwa 90° herausgeschwenkten Öffnungslage des Rahmens 3 sind das auf der Rückseite 5 des Rahmens 3 gelegene Steckerfeld 7 und die beiden übereinander angeordneten Magazine 16,17 für Spleißkassetten 19 zugreifbar, welche aus den Einschuböffnungen 18 herausnehmbar und in diese wieder einschiebbar sind.

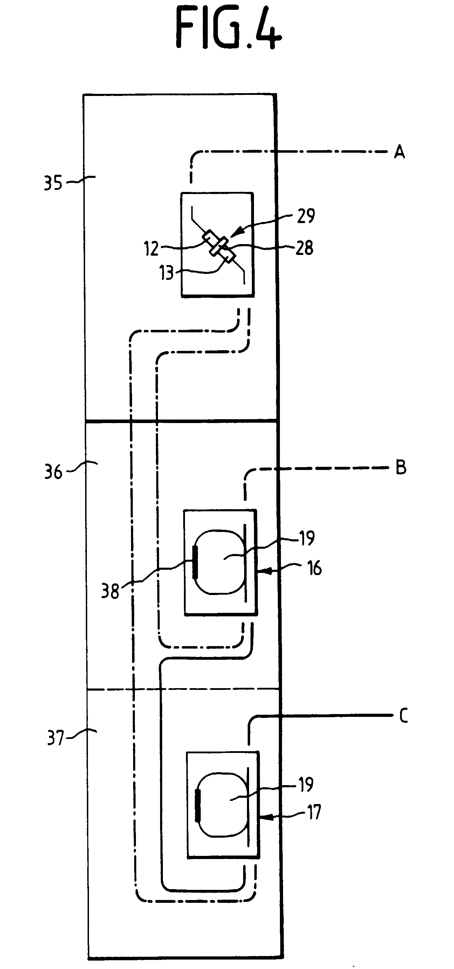

In den Figuren 2 und 4 sind die Anordnung und Führung der in der Rangierebene 35 über Kupplungen 12,13 angeschlossenen Vermittlungsstellenkabel A, der in der oberen Kassettenebene 36 über eine im Magazin 16 gelagerte Spleißkassette 19 angeschlossenen Ortskabel B und der in der unteren Kassettenebene 37 über eine im Magazin 17 gelagerte Spleißkassette 19 angeschlossenen Ortsverbindungskabel C dargestellt. Die Glasfaserkabel sind in den Spleißkassetten 19 über Spleiße 38 miteinander verbunden. Vermittlungsstellenkabel A sind von der Rangierebene 35 sowohl zu der oberen Kassettenebene 36 als auch zu der unteren Kassettenebene 37 geführt, d.h. von der Rangierebene 35 zu Ortsverbindungsebene in der unteren Kassettenebene 37.

### Bezugszeichenliste

- 01: Gestell
- 02: Strebe
- 03: Rahmen
- 04: Vorderseite
- 05: Rückseite
- 06: Steckerfeld
- 07: Steckerfeld
- 08: Glasfaserkabelader
- 09: Glasfaserkabelader
- 10: Pigtail
- 11: Pigtail
- 12: Kupplung
- 13: Kupplung
- 14: Holm
- 15: Träger
- 16: Magazin
- 17: Magazin
- 18: Einschuböffnung
- 19: Spleißkassette
- 20: Führung
- 21: Führung
- 22: Führung
- 23: Führung
- 24: Führung
- 25: Umlenkung
- 26: Vertikalachse
- 27: Einbuchtung
- 28: Trägerplatte
- 29: Rangierfeld
- 30: Anschlußfeld
- 31: Anschlußleiste
- 32: Stecker
- 33: Stecker
- 34: Abdeckplatte
- 35: Rangierebene
- 36: obere Kassettenebene
- 37: untere Kassettenebene
- 38: Spleiß

- A: Vermittlungsstellenkabel
- B: Ortskabel
- C: Ortsverbindungskabel

## Patentansprüche

1. Schaltgarnitur für Glasfaserkabel der Fernmelde- und Datentechnik, insbesondere Glasfaserkabel-Aufteilungs- und Endgestell, aus einem am Gestell gelagerten Rahmen mit einem Rangierfeld für die Glasfaserkabeladern und mit mindestens einem, mit Einschuböffnungen für Spleißkassetten versehenen Magazin,
**dadurch gekennzeichnet,**
daß der Rahmen (3) um eine Vertikalachse (26) schwenkbar am Gestell (1) gelagert ist, daß am Rahmen (3) ein Rangierfeld (29) mit einem von der Vorderseite (4) und von der Rückseite (5) des Rahmens (3) zugänglichen Steckerfeld (6,7) für ankommende und abgehende Glasfaserkabeladern (8,9) angeordnet ist und daß auf der Rückseite (5) des Rahmens (3) mindestens ein Magazin (16,17) vorgesehen ist, dessen Spleißkassetten-Einschuböffnungen (18) parallel zur Rückseite (5) des Rahmens (3) und im wesentlichen senkrecht zu dessen Vertikalachse (26) auf der dieser gegenüberliegenden Seite des Rahmens (3) angeordnet sind.

2. Schaltgarnitur nach Anspruch 1,
**dadurch gekennzeichnet**,
daß der Rahmen (3) aus zwei seitlichen Holmen (14) gebildet ist, zwischen denen die Baugruppen (6,7,16,17) in modulariger Weise einsetzbar sind.

3. Schaltgarnitur nach Anspruch 1,
**dadurch gekennzeichnet**,
daß das Magazin (16,17) quer zu einem auf der Rückseite (5) des Rahmens (3) und senkrecht zu diesem angeordneten Träger (15) angebracht ist, der Glasfaserkabel-Führungen (20 bis 24) und Glasfaserkabel-Umlenkungen (25) aufweist.

4. Schaltgarnitur nach Anspruch 1 oder 2,
**dadurch gekennzeichnet**,
daß zwischen den Holmen (14) ein von der Vorderseite (4) des Rahmens (3) zugängliches Anschlußfeld (30) für Kupferadern angeordnet ist.

5. Schaltgarnitur nach einem der Ansprüche 1 bis 4,
**dadurch gekennzeichnet**,
daß unterhalb des Rangierfeldes (29) auf der Vorderseite (4) des Rahmens (3) Überlängen des Vermittlungskabels zwischen den als Kabelführungen ausgebildeten Holmen (14) aufgenommen sind.

## Claims

1. Switching accessory for optical fibre cables for telecommunications engineering and data systems technology, in particular an optical fibre cable distributing and terminating rack, comprising a frame mounted on the rack and having a jumpering panel for the optical fibre cable fibres and having at least one magazine provided with insertion openings for splicing cassettes, characterized in that the frame (3) is mounted on the rack (1) such that it can pivot about a vertical axis (26), in that arranged on the frame (3) is a jumpering panel (29) having a connector section (6, 7), accessible from the front side (4) and from the rear side (5) of the frame (3), for incoming and outgoing optical fibre cable fibres (8, 9), and in that provided on the rear side (5) of the frame (3) is at least one magazine (16, 17) whose splicing cassette insertion openings (18) are arranged parallel to the rear side (5) of the frame (3) and essentially perpendicular to the vertical axis (26) thereof on the side of the frame (3) opposite said axis.

2. Switching accessory according to Claim 1, characterized in that the frame (3) is formed from two lateral uprights (14) between which the subassemblies (6, 7, 16, 17) can be inserted in a modular fashion.

3. Switching accessory according to Claim 1, characterized in that the magazine (16, 17) is fitted transverse to a carrier (15), which is arranged on the rear side (5) of the frame (3) and perpendicular thereto and which has optical fibre cable guides (20 to 24) and optical fibre cable deflectors (25).

4. Switching accessory according to Claim 1 or 2, characterized in that a terminal panel (30) for copper wires which is accessible from the front side (4) of the frame (3) is arranged between the uprights (14).

5. Switching accessory according to one of Claims 1 to 4, characterized in that excess lengths of the switching cable are accommodated below the jumpering panel (29) on the front side (4) of the frame (3), between the uprights (14) contructed as cable guides.

## Revendications

1. Dispositif de commutation pour câbles à fibres de verre dans la technique de télécommunications et de données, en particulier support de séparation et support terminal pour câbles à fibres optiques, comprenant, posé sur le support, un cadre présentant une baie de manipulation des fils des câbles à fibres optiques et au moins un magasin pourvu d'ouvertures d'enfichage de cassettes d'épissurage,
caractérisé en ce que le cadre (3) est monté sur le support (1) de manière à pouvoir pivoter autour d'un axe vertical (26), en ce que, sur le cadre (3), est disposé un tableau de connexions (29) comportant un panneau de connexions (6, 7) accessible par la face avant (4) et par la face arrière (5) du cadre (3), et destiné aux fils entrants et sortants (8, 9) des câbles à fibres optiques, et en ce que, sur la face arrière (5) du cadre (3), est prévu au moins un magasin (16, 17) dont les ouvertures (18) d'enfichage de cassettes d'épissurage sont disposées parallèlement à la face arrière (5) du cadre (3) et essentiellement perpendiculairement à l'axe vertical (26) de ce dernier, sur la face du cadre (3) opposée à ladite face.

2. Dispositif de commutation suivant la revendication 1,
caractérisé en ce que le cadre (3) est formé de deux longerons latéraux (14) entre lesquels les modules (6, 7, 16, 17) peuvent être insérés de manière modulaire.

3. Dispositif de commutation suivant la revendication 1,
caractérisé en ce que le magasin (16, 17) est placé transversalement à un élément porteur (15) disposé sur la face arrière (5) du cadre (3) et perpendiculairement à ce dernier, lequel support présente des passages (20 à 24) pour câbles à fibres optiques et des dérivations (25) pour câbles à fibres optiques.

4. Dispositif de commutation suivant la revendication 1 ou 2,
caractérisé en ce qu'une baie de raccordement (30) accessible par la face avant (4) du cadre (3) et destinée aux fils de cuivre est disposée entre les longerons (14).

5. Dispositif de commutation suivant l'une quelconque des revendications 1 à 4,
caractérisé en ce qu'au-dessous de la baie de manipulation (29), sur la face avant (4) du cadre (3), les longueurs excessives du câble de commutation sont logées entre les longerons (14) réalisés sous la forme de passages de câble.
